# EUROPÄISCHE PATENTSCHRIFT

(11) **EP 3 212 349 B1**
(45) Veröffentlichungstag und Bekanntmachung des Hinweises auf die Patenterteilung: **19.09.2018**
(21) Anmeldenummer: 15787988.3
(22) Anmeldetag: 28.10.2015
(51) Int. Cl.: B21K 23/00, B21D 53/36, B21F 37/02, F16L 33/035, B21D 19/00, B21D 22/04, B21D 28/16, B21D 53/16, F16B 21/18

(54) **VERFAHREN ZUM HERSTELLEN EINES SPANNRINGS**
TENSION RING MANUFACTURING PROCESS
PROCÉDÉ DE FABRICATION D'UNE BAGUE DE SERRAGE

(30) Priorität: 29.10.2014 DE 102014115727
(43) Veröffentlichungstag der Anmeldung: 06.09.2017
(73) Patentinhaber: Hugo Benzing GmbH & Co. KG, 70825 Korntal-Münchingen (DE)
(72) Erfinder: GUTSCHER, Horst, 71229 Leonberg (DE)
(74) Vertreter: Fleck, Hermann-Josef
(86) Internationale Anmeldenummer: PCT/EP2015/075043
(87) Internationale Veröffentlichungsnummer: WO 2016/066720

(56) Entgegenhaltungen:
- WO-A1-83/03211
- US-A1- 2003 059 251

## Beschreibung

Die Erfindung bezieht sich auf ein Verfahren zum Herstellen eines Spannrings, bei dem auf der Oberseite und der Unterseite eines flächigen Blechmaterials im Bereich einer Ringkontur vorstehende Zapfen gebildet werden und nach einem Ausschneiden der Ringkontur beim Schneiden entstandene Grate durch Entgraten entfernt werden.

In der gattungsgemäßen US 2003/059251 A1 ist ein Verfahren zum Herstellen eines Spannrings mit vorstehenden Zapfen bekannt. Häufig sind bei derartigen Spannringen mit Zapfen im Bereich der Schneidkanten trotz einer Entgratungsbehandlung noch scharfkantige Stellen an dem Spannring vorhanden.

Aus der EP 1 156 896 B1 ist ein Klemmring aus einem eingerollten Metallbandstück mit zwei Enden bekannt, von denen eines mit Vertiefungen und das andere mit in diese einsteckbaren Vorsprüngen versehen ist.
In der DE 26 08 870 C2 ist ein Presswerkzeug zur spanlosen Herstellung eines Spannrings gezeigt.
Die CH 437 926 A zeigt ein Verfahren zur Herstellung eines Spannrings.

Diese Aufgabe wird mit den Merkmalen des Anspruchs 1 gelöst. Hierbei ist vorgesehen, dass vor einem Fertigschneiden durch vollständiges Ausschneiden der Randkontur, das von der einen Seite des flächigen Blechmaterials aus durchgeführt wird, von der anderen Seite aus die Ringkontur in der Nähe des auf dieser Seite vorstehenden Zapfens teilweise freigeschnitten wird.
Wie sich in Untersuchungen der Erfinder gezeigt hat, bleibt im Bereich eines vorstehenden Zapfens an der Ringkontur ein scharfkantiger Grat stehen. Die Grate entstehen in der Regel beim Schneiden entlang der Ringkontur auf der in Schneidrichtung zweiten Seite des Spannrings, an der das Schneidwerkzeug austritt, wie z. B. beim Stanzen. Bei Spannringen mit auf beiden entgegengesetzten Seiten, d. h. auf der Unterseite und der Oberseite, vorstehenden Zapfen ist der Kantenbereich um den vorstehenden Zapfen für die Entgratungsbehandlung relativ schlecht zugänglich, so dass dort besonders häufig die Entgratung unzureichend ist. Beispielsweise werden bei Entgratung mittels Trowalsteinen die Grate nur unzulänglich abgetragen, da der in diesem Bereich vorstehenden Zapfen die Wirksamkeit der Steine beim Abrunden der Kante behindert. Mit den beschriebenen Maßnahmen wird jedoch die Schneidkante in beiden Kantenbereichen um die beiden Zapfen jeweils auf die von dem vorstehenden Zapfen abgekehrte Seite des Spannrings verlagert, so dass der Schneidgrat wirkungsvoll abgetragen werden kann, ohne dass die Zapfen den Entgratungsprozess, wie z. B. beim Trowalisieren, behindern.

Eine vorteilhafte Ausgestaltung bei der Durchführung des Verfahrens besteht darin, dass ein Spannring mit einem Spalt hergestellt wird, bei dem jeweils ein Zapfen an den beiden spaltseitigen Endabschnitten des Spannrings auf dessen beiden gegenüberliegenden Seiten vorstehend eingeformt werden.

Vorteilhafte Fertigungsschritte ergeben sich dadurch, dass der Spannring aus plattenförmigem Blechmaterial hergestellt wird, wobei die Zapfen durch Prägen gebildet werden.

Für die Fertigung sind des Weiteren die Maßnahmen von Vorteil, dass das teilweise Freischneiden und das Fertigschneiden von den entgegengesetzten Seiten durch Stanzen erfolgt.

Eine vorteilhafte Ausgestaltung des Verfahrens besteht ferner darin, dass der Spannring nach dem Fertigschneiden gehärtet wird.

Weiterhin besteht eine vorteilhafte Vorgehensweise darin, dass das Entgraten nach dem Härten durchgeführt wird.

Für die Fertigung des Spannrings ist weiterhin die Maßnahme von Vorteil, dass das Entgraten mittels Trowalsteinen vorgenommen wird. Auf diese Weise lässt sich eine Vielzahl von Spannringen mit hoher Bearbeitungsgüte effizient entgraten.

Die Erfindung wird nachfolgend anhand von Ausführungsbeispielen unter Bezugnahme auf die Zeichnungen näher erläutert. Es zeigen:
- Fig. 1: einen Spannring mit auf zwei gegenüberliegenden Seiten vorstehenden Zapfen in Draufsicht und in einer Querschnittsdarstellung im Bereich der Zapfen mit schematischer Darstellung eines Entgratungsvorgangs und
- Fig. 2: verschiedene Herstellungsschritte bei der Fertigung eines Spannrings mit zwei Zapfen auf gegenüberliegenden Seiten mit zwei Ansichten in Draufsicht und einer Querschnittsdarstellung im Bereich der Zapfen bei einer erfindungsgemäßen Vorgehensweise.

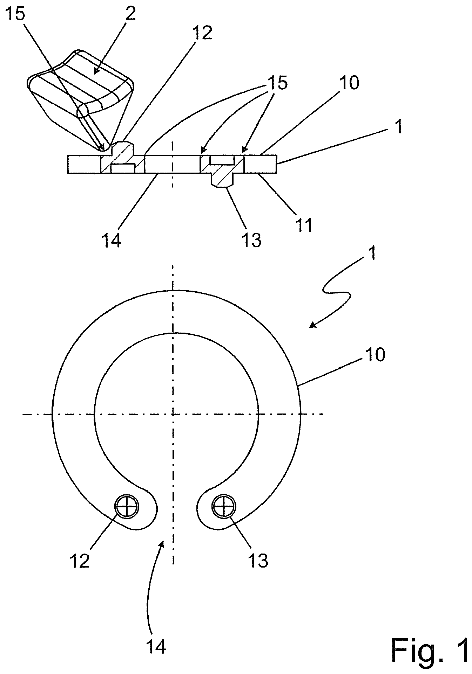

Fig. 1 zeigt einen Spannring 1 mit einem Spalt 14 zwischen zwei einander zugekehrten Endabschnitten, so dass die beiden entstehenden Schenkel des Spannrings 1 gegen ihre Federelastizität mit entsprechender Kraft nach innen oder außen in gewissem Umfang auslenkbar sind, um die gewünschte Spannung zu erzeugen. An beiden im Spaltbereich einander zugewandten Endabschnitten sind auf den entgegengesetzten Seiten des Spannrings 1, nämlich einerseits auf der Oberseite 10 und andererseits auf der Unterseite 11, ein oberseitiger bzw. unterseitiger Zapfen 12, 13, vorstehend ausgebildet, beispielsweise durch Prägen geformt (oder beispielsweise durch Einsetzen eines separaten Zapfens in ein Loch hergestellt). Durch die Anordnung der beiden Zapfen auf den entgegengesetzten Seiten des Spannrings 1 können auf den entgegengesetzten Seiten des Spannrings 1 angebrachte Teile, wie z. B. Teil-Zahlräder in Drehrichtung gegeneinander vorgespannt werden, um ein Zahnspiel zu minimieren.

Der Spannring 1 ist beispielsweise aus einem flachen Blechmaterial bzw. einer Blechplatte aus einem geeigneten Metall, wie Stahl, herausgeschnitten, insbesondere durch Stanzen. Dabei entstehen auf der in Schneidrichtung bzw. Stanzrichtung vorne liegenden Seite, an der das Schneidwerkzeug aus dem Blechmaterial austritt entlang der Stanzkontur bzw. Randkontur relativ scharfkantige Grate 15, wie aus der in Fig. 1 oben gezeigten Querschnittsdarstellung ersichtlich. Im Bereich des auf der gleichen Seite wie die Grate 15, in dem gezeigten Beispiel also auf der Oberseite 10, vorstehenden Zapfens 12 sind die Grate 15 von den Entgratungsmitteln, wie z. B. Trowalsteinen 2 beim Entgraten durch Trowalisieren, nicht frei rund um die Kante zugänglich, so dass die Entgratung in diesem Bereich häufig unzureichend ist.

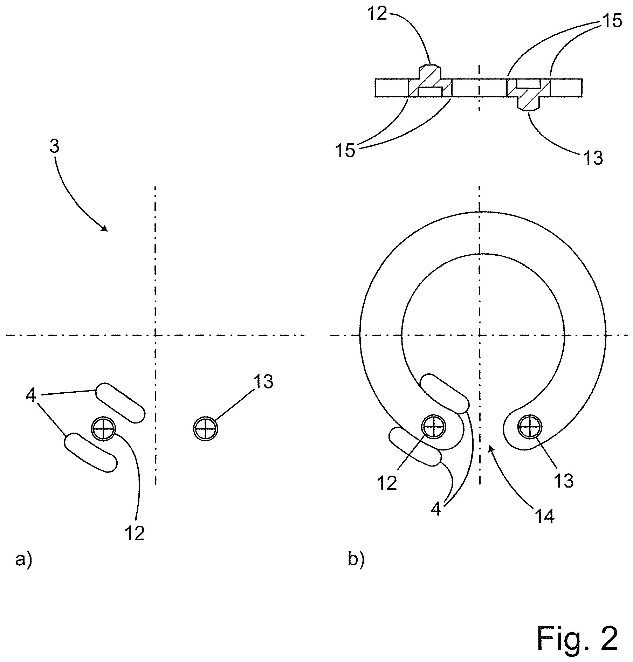

Bei der in Fig. 2 gezeigten erfindungsgemäßen Vorgehensweise wird daher vor dem vollständigen Ausschneiden bzw. Fertigschneiden wie z. B. durch Stanzen, zunächst von der anderen Seite der Blechplatte 3 aus im Konturbereich nahe dem betreffenden Zapfen 12 ein weiterer Schneidschritt, nämlich ein Freischnitt 4, ausgeführt. Dadurch entsteht auch im nächsten und nahen Bereich des Zapfens 12 der Schneidgrat auf der entgegengesetzten Seite, so dass auch dort beim späteren Entgraten der durch Schneiden entstehende Grat 15 ungehindert beseitigbar ist.

Nach dem Schritt des Freischneidens wird der Spannring 1 aus dem Blechmaterial bzw. der Blechplatte 3 von der entgegengesetzten Seite aus vollständig ausgeschnitten, d. h. fertig geschnitten, wie die in Fig. 2 gezeigte Schrittfolge a) und b) erkennen lässt. Die aufeinander folgenden Schritte des Freischneidens 4 und des Fertigschneidens können mit Schneidwerkzeugen von entgegengesetzten Seiten der Blechplatte 3 aus erfolgen oder von der gleichen Seite der Blechplatte 3 aus, wobei diese Blechplatte 3 nach dem Freischneiden 4 gewendet und den Schneidwerkzeugen für das Fertigschneiden zugeführt wird. Wie die Querschnittsdarstellung in Fig. 2 zeigt, liegen die Grate 15 im Bereich der Zapfen auf den von diesen abgewandten Seiten des Spannrings 1, der z. B. aus dem flachen Blechmaterial ausgestanzt ist.
Bei einer vorteilhaften Herstellungsweise werden die aus dem metallischen Blechmaterial geschnittenen Spannringe 1 gehärtet und dann entgratet, wozu sie beispielsweise einem Trowalisierprozess mittels Trowalsteinen 2 unterzogen werden.

## Patentansprüche

1. Verfahren zum Herstellen eines Spannrings (1), bei dem auf der Oberseite und der Unterseite eines flächigen Blechmaterials (3) im Bereich einer Ringkontur vorstehende Zapfen (12, 13) gebildet werden und nach einem Ausschneiden der Ringkontur beim Schneiden entstandene Grate (15) durch Entgraten entfernt werden,
**dadurch gekennzeichnet,**
**dass** vor einem Fertigschneiden durch vollständiges Ausschneiden der Ringkontur, das von der einen Seite des flächigen Blechmaterials (3) aus durchgeführt wird, von der anderen Seite aus die Ringkontur in der Nähe des auf dieser Seite vorstehenden Zapfens (12 oder 13) teilweise freigeschnitten wird.

2. Verfahren nach Anspruch 1,
**dadurch gekennzeichnet,**
**dass** ein Spannring (1) mit einem Spalt hergestellt wird, bei dem jeweils ein Zapfen (12, 13) an den beiden spaltseitigen Endabschnitten des Spannrings (1) auf dessen beiden gegenüberliegenden Seiten vorstehend eingeformt werden.

3. Verfahren nach Anspruch 1 oder 2,
**dadurch gekennzeichnet,**
**dass** der Spannring (1) aus plattenförmigem Blechmaterial (3) hergestellt wird, wobei die Zapfen (12, 13) durch Prägen gebildet werden.

4. Verfahren nach einem der vorhergehenden Ansprüche,
**dadurch gekennzeichnet,**
**dass** das teilweise Freischneiden und das Fertigschneiden durch Stanzen erfolgt.

5. Verfahren nach einem der vorhergehenden Ansprüche,
**dadurch gekennzeichnet,**
**dass** der Spannring (1) nach dem Fertigschneiden gehärtet wird.

6. Verfahren nach Anspruch 5,
**dadurch gekennzeichnet,**
**dass** das Entgraten nach dem Härten durchgeführt wird.

7. Verfahren nach einem der vorhergehenden Ansprüche,
**dadurch gekennzeichnet,**
**dass** das Entgraten mittels Trowalsteinen (2) vorgenommen wird.

## Claims

1. Method for producing a tensioning ring (1), in which projecting pins (12, 13) are formed on the upper and lower face of a planar sheet-metal material (3) in the region of a ring contour and in which burrs (15) formed during cutting are removed by means of deburring after the ring contour has been cut out, **characterized in that**, prior to final cutting, that is prior to the ring contour being completely cut out, which is carried out from one side of the planar sheet-metal material (3), the ring contour in the vicinity of the projecting pin (12 or 13) on the other side is partially cut free from said other side.

2. Method according to claim 1, **characterized in that** a tensioning ring (1) comprising a gap is produced, in which method a pin (12, 13) is in each case molded on the two gap-side end portions of the tensioning ring (1) so as to project from opposite sides of said end portions.

3. Method according to either claim 1 or claim 2, **characterized in that** the tensioning ring (1) is produced from planar sheet-metal material (3), the pins (12, 13) being formed by means of embossing.

4. Method according to any of the preceding claims, **characterized in that** the partial cutting-free and the final cutting are carried out by means of stamping.

5. Method according to any of the preceding claims, **characterized in that** the tensioning ring (1) is hardened after the final cutting.

6. Method according to claim 5, **characterized in that** the deburring is carried out after hardening.

7. Method according to any of the preceding claims, **characterized in that** the deburring is performed by means of Trowal stones (2).

## Revendications

1. Procédé de fabrication d'une bague de serrage (1), selon lequel des broches (12, 13) saillantes sont formées sur le côté supérieur et sur le côté inférieur d'un matériau de tôle plat (3) dans la région d'un contour de bague et, après une découpe du contour de bague, les ébarbures (15) produites lors de la découpe sont éliminées par ébarbage, **caractérisé en ce qu'**avant une coupe de finition par découpe complète du contour de bague, qui est effectuée depuis l'un des côtés du matériau de tôle plat (3), le contour de bague est dégagé partiellement par découpage, depuis l'autre côté, au voisinage de la broche (12 ou 13) saillant sur ce côté.

2. Procédé selon la revendication 1, **caractérisé en ce qu'**une bague de serrage (1) est fabriquée avec une fente, bague de serrage dans laquelle respectivement une broche (12, 13) est formée de manière saillante sur les deux parties d'extrémité côté fente de la bague de serrage (1) sur ses deux côtés opposés.

3. Procédé selon la revendication 1 ou 2, **caractérisé en ce que** la bague de serrage (1) est fabriquée à partir de matériau de tôle (3) en forme de plaque, les broches (12, 13) étant formées par estampage.

4. Procédé selon l'une des revendications précédentes, **caractérisé en ce que** le dégagement partiel par découpage et la coupe de finition s'effectuent par découpage à la matrice.

5. Procédé selon l'une des revendications précédentes, **caractérisé en ce que** la bague de serrage (1) est trempée après la coupe de finition.

6. Procédé selon la revendication 5, **caractérisé en ce que** l'ébarbage est effectué après la trempe.

7. Procédé selon l'une des revendications précédentes, **caractérisé en ce que** l'ébarbage est réalisé au moyen d'abrasifs de tribofinition (2).
